(19) **Europäisches Patentamt European Patent Office Office européen des brevets**

(11) **EP 3 151 558 A1**

(12) **EUROPEAN PATENT APPLICATION**

(43) Date of publication:
**05.04.2017 Bulletin 2017/14**

(51) Int Cl.:
**H04N 19/109** (2014.01)   **H04N 19/11** (2014.01)
**H04N 19/147** (2014.01)   **H04N 19/176** (2014.01)
**H04N 19/192** (2014.01)

(21) Application number: **15306538.8**

(22) Date of filing: **30.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
  **92130 Issy-les-Moulineaux (FR)**
• **INRIA - Institut National de Recherche en Informatique et en Automatique**
  **78150 Le Chesnay (FR)**

(72) Inventors:
• **ALAIN, Martin**
  **35576 CESSON SEVIGNE (FR)**
• **THOREAU, Dominique**
  **35576 CESSON SEVIGNE (FR)**
• **GUILLOTEL, Philippe**
  **35576 CESSON SEVIGNE (FR)**
• **GUILLEMOT, Christine**
  **35042 RENNES CEDEX (FR)**

(74) Representative: **Huchet, Anne**
**TECHNICOLOR**
**1-5, rue Jeanne d'Arc**
**92130 Issy-les-Moulineaux (FR)**

(54) **METHOD AND DEVICE FOR PREDICTING A CURRENT BLOCK OF PIXELS IN A CURRENT FRAME, AND CORRESPONDING ENCODING AND/OR DECODING METHODS AND DEVICES**

(57) The disclosure relates to a method for predicting a current block of pixels in a current frame, comprising:
- obtaining (11) a first prediction of the current block, delivering a first predicted block,
- updating said first predicted block by implementing at least one iteration (12) of the following steps:
◦ obtaining (121) a current patch formed by a current template of the current block and an updated predicted block obtained at a previous iteration;
o searching (122) for K nearest neighbor patches of said current patch in a decoded part of the current frame or in at least one reference frame;
o determining (123) a linear combination of the K nearest neighbor patches which approximates the current patch, or of the K templates of the nearest neighbor patches which approximates the current template, according to a predetermined criterion,
◦ obtaining (124) an updated predicted block by applying said linear combination to the corresponding K blocks of the nearest neighbor patches.

Fig. 1

Printed by Jouve, 75001 PARIS (FR)

EP 3 151 558 A1

**Description**

**1. Technical field**

The present disclosure relates to the field of signal processing, and more specifically to the field of prediction for the processing of images or videos.

It offers a technique for predicting of a block of pixels, which can optimize the rate distortion of the encoding and decoding processes.

Such technique can for example be applied to video compression. In particular, the method can be implemented in video compression codec such as HEVC or VP9.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Images or videos are known to need a lot of memory space that, when they are transmitted, makes it necessary to compress them in order to avoid, for example, the problem of congestion in the communications network used for that transmission.

Current compression standards, such as H.264 or HEVC for example, use techniques of spatial or temporal predictions to enable encoding and transmission of the blocks of a frame. Such standards use spatial propagation of neighboring pixels of a current block to obtain the intra predictor and use block matching based motion estimation/compensation to obtain the inter predictor.

Different techniques have been developed in order to improve the quality of the intra or inter predictor, and/or the overall rate-distortion performances.

For example, the template matching technique, or TM, exploits the correlation between the current block and a pre-defined set of neighboring pixels, called the template of the current block. According to the template matching technique, the "best matching template", which is the nearest neighbor template of the template of the current block, is searched in the decoded part of the current frame for intra prediction, or in one or several reference frames for inter prediction. The block which is adjacent to this best matching template is used as a predictor for the current block.

Such technique is for example disclosed by T. K. Tan et al. in "Intra prediction by template matching" (IEEE Int. Conf. Image Process. 2006, pp. 1693-1696) for intra prediction, or K. Sugimoto et al. in "Inter frame coding with template matching spatiotemporal prediction" (IEEE Int. Conf. Image Process. 2004, vol. 1, pp. 465-468) for inter prediction.

One advantage of this technique is that the search for the best matching template can be reproduced at the decoder side, so no motion information needs to be transmitted.

Another technique, known as multi-patches technique or K-NN, has been developed to improve the template matching technique, by considering several templates instead of one. According to this technique, K "best matching templates", which are the K nearest neighbor templates of the template of the current block (K-NN), are searched in the decoded part of the current frame for intra prediction, or in one or several reference frames for inter prediction. Weights of the linear combination of the $K$-NN templates which best approximate the current template are determined, and these weights are applied to the $K$ adjacent blocks of the $K$-NN templates in order to obtain the predictor.

Such technique is for example disclosed by S. Cherigui et al. in "Correspondence map-aided neighbor embedding for image intra prediction" (IEEE Transactions on Image Processing., vol. 22-3, pp. 1161-1174, Mar. 2013) for intra prediction and M. Alain et al. in "Locally linear embedding methods for inter image coding", in IEEE Int. Conf. Image Process. 2013, pp. 1904-1908) for inter prediction. Note that these techniques are equivalent to TM when $K = 1$.

As for the template matching technique, the multi-patches technique can be reproduced at the decoder side, so that no side information needs to be transmitted.

However, these techniques for predicting a current block are efficient, i.e. give a good predictor, only when the pixels of the K templates and the pixels of the K blocks adjacent to the K templates are highly correlated. Otherwise, the K-NN of the template of the current block may not give adequate candidates to compute the predictor.

Thus, a need exists for an alternate technique for obtaining a predictor for the current block, according to intra or inter prediction, which doesn't present the drawbacks of the prior art techniques.

**3. Summary**

The present disclosure relates to a method for predicting a current block of pixels in a current frame, comprising:

- obtaining a first prediction of the current block, delivering a first predicted block,
- updating said first predicted block by implementing at least one iteration of the following steps:

    ○ obtaining a current patch formed by a current template of the current block and an updated predicted block obtained at a previous iteration;

wherein the current template is formed by a set of pixels neighboring the current block and wherein, for the first iteration, the updated predicted block obtained at a previous iteration is the first predicted block;

o searching for K nearest neighbor patches of said current patch in a decoded part of the current frame or in at least one reference frame; wherein each of said K nearest neighbor patches is formed by a block and a template formed by a set of pixels neighboring said block;

o determining a linear combination of the K nearest neighbor patches which approximates the current patch, or of the K templates of the nearest neighbor patches which approximates the current template, according to a predetermined criterion,

∘ obtaining an updated predicted block by applying said linear combination to the corresponding K blocks of the nearest neighbor patches.

According to the disclosure, a first predictor for the current block is obtained (first predicted block) and is then updated at least one time.

In particular, each iteration for updating the predicted block takes into account the texture information of the whole current patch, which comprises both the current template and an estimation of the current block (i.e. the updated predicted block obtained at a previous iteration), and not only the current template.

In this way, the predicted block is updated to become closer to the current block, in term of pixels distance. In other words, the updated predicted block according to at least one embodiment is a better predictor for the current block. The present disclosure thus makes it possible to reduce the encoding cost, compared to classical prediction techniques.

Such technique according to the disclosure could be applied to either intra prediction or inter prediction of a current block.

According to at least one embodiment, obtaining a first prediction of the current block comprises:

- searching for K nearest neighbor templates of the current template of the current block in a decoded part of the current frame or in at least one reference frame,
- determining a linear combination of the K nearest neighbor templates which approximate the current template according to a predetermined criterion,
- obtaining the first predicted block by applying said linear combination to the K blocks adjacent to the K nearest neighbor templates.

In this way, the first prediction of the current block implements a template matching (if $K = 1$) or multi-patches technique (if $K > 1$). The first predicted block obtained by the template matching or multi-patches technique can then be updated (for example improved) by implementing at least one of the iterations described above.

In particular, even if the first predicted block is not a "good" predictor for the current block (i.e. the first predicted block is far from the current block in term of pixels distance), for example because at least one template and its adjacent block used to obtain the first predicted block are not correlated, such first prediction is updated according to the disclosure, in order to obtain an updated predicted block which is a better predictor for the current block, compared to the first predictor.

In particular, when applying an inter-prediction technique, the K nearest neighbor templates can be found at sub-pixel accuracy. Thus, the correlation between the first predicted block and the current block is increased, which improves the correlation of the patches for the $K$-NN search of the following iterations.

According to another embodiment, obtaining a first prediction of the current block comprises:

- determining a motion vector between the current block and a corresponding reference block in a reference frame;
- obtaining the first predicted block by applying the motion vector to the reference block.

In this way, the first predicted block can be initialized using motion estimation/compensation. In the case the method is implemented in a codec such as HEVC, a block matching algorithm is used, which is an inter prediction technique. The first predicted block obtained by the block matching technique can then be updated (for example improved) by implementing at least one of the iterations described above.

According to another embodiment, obtaining a first prediction of the current block comprises:

- determining a directional intra prediction mode;
- obtaining the first predicted block by applying the directional intra prediction mode to pixels located in a decoded part of the current frame and neighboring the first predicted block.

According to at least one embodiment, the prediction method also comprises computing a rate distortion value for the first predicted block and computing a rate distortion value for the updated predicted block obtained at each iteration.

Such rate distortion value can be computed at the end of each iteration, once the updated predicted block has been obtained.

According to at least one embodiment, the rate distortion value for the updated predicted block obtained at a current iteration takes into account a cost of transmission of an indicator representative of said current iteration.

According to at least one embodiment, the iterations for updating said first predicted block are stopped when the number of iterations is equal to a pre-defined number of iterations, or when the rate distortion value for the updated predicted block obtained at a current iteration is greater than the rate distortion value for the updated predicted block obtained at the previous iteration.

In this way, a rate distortion optimization criterion could be used to stop the iterative process, when a "good" predictor has been found.

The present disclosure also relates to a device for predicting a current block in a current frame, comprising at least one processor configured to:

- obtain a first prediction of the current block, delivering a first predicted block,
- update said first predicted block by implementing at least one iteration of the following steps:

  ◦ obtaining a current patch formed by a current template of the current block and an updated predicted block obtained at a previous iteration; wherein the current template is formed by a set of pixels neighboring the current block and wherein, for the first iteration, the updated predicted block obtained at a previous iteration is the first predicted block;

  o searching for K nearest neighbor patches of said current patch in a decoded part of the current frame or in at least one reference frame; wherein each of said K nearest neighbor patches is formed by a block and a template formed by a set of pixels neighboring said block;

  o determining a linear combination of the K nearest neighbor patches which approximates the current patch, or of the K templates of the nearest neighbor patches which approximates the current template, according to a predetermined criterion;

  ◦ obtaining an updated predicted block by applying said linear combination to the corresponding K blocks of the nearest neighbor patches.

Such a device can be especially adapted to implement the prediction method described here above. It could of course comprise the different characteristics pertaining to the prediction method according to an embodiment of the disclosure, which can be combined or taken separately. Thus, the characteristics and advantages of the device are the same as those of the prediction method and are not described in more ample detail.

In addition, the present disclosure relates to a method for encoding a sequence of frames, during which a predicted block is calculated for a current block of pixels of a current frame of the sequence, wherein the predicted block is the updated predicted block obtained from a prediction method such as described above. The characteristics and advantages of the encoding method are thus the same as those of the prediction method.

Optionally, such encoding method comprises:

- computing a prediction residue by comparing the current block with the updated predicted block obtained at the final iteration,
- encoding said prediction residue,
- transmitting and/or storing said encoded prediction residue.

According to at least one embodiment, such encoding method also comprises transmitting and/or storing at least one indicator representative of the iterations implemented by the prediction method, among which an indicator representative of the final iteration.

Such indicator is for example the iteration index, with the first iteration corresponding to index 1, the second iteration corresponding to index 2, and so on.

In particular, the indicator representative of the final iteration should be transmitted to the decoder, to enable the decoder to obtain the same updated predicted block than the one used for the computation of a prediction residue (obtained at the final iteration).

According to intra prediction, at least one indicator can be transmitted by replacing at least one intra prediction directional mode. For example, at least one indicator is transmitted by replacing at least one directional mode index by at least one iteration index.

In this way, there is no additional cost due to the transmission of an indicator representative of the final iteration, at least.

The present disclosure thus also pertains to a signal representing a sequence of frames encoded according to the encoding method described above, comprising at least one indicator representative of the iterations implemented to obtain the updated predicted block, among which an indicator representative of the final iteration.

Such signal could also carry the encoded prediction residue computed by comparing the current block with the updated predicted block obtained at the final iteration.

The present disclosure also pertains to a method for decoding a sequence of frames, during which a predicted block is calculated for a current block of pixels of a current frame of the sequence, wherein the predicted block is the updated predicted block obtained from a prediction method such as described above.

Such decoding method is adapted for decoding a signal such as described above. Optionally, such decoding method comprises:

- obtaining an encoded prediction residue, computed at encoding by comparing the current block with the updated predicted block obtained at the final iteration,
- decoding the encoded prediction residue,
- combining the decoded prediction residue with the updated predicted block obtained at the final iteration, to reconstruct the current block.

In particular, such method comprises obtaining at least one indicator representative of at least one iteration implemented at encoding to obtain the updated predicted block, among which an indicator representative of the final iteration.

Such indicator(s) make(s) it possible for the decoder to obtain the same updated predicted block than the one used for the computation of the prediction residue (obtained at the final iteration).

In particular, such decoding method could be implemented to decode a signal comprising at least one indicator representative of the iterations implemented by the prediction method described above, among which an indicator representative of the final iteration.

It should be noted that the characteristics and advantages of the decoding method are the same as those of the encoding method.

The disclosure also relates to a device for encoding and/or decoding a sequence of frames, comprising a prediction device thus as described above.

Such device for encoding and/or decoding a sequence of frames is adapted especially to implementing the encoding method and/or the decoding method described here above. It is for example a video encoder and/or decoder according to standard H.264, HEVC or VP9.

Another aspect of the disclosure pertains to at least one computer program product downloadable from a communication network and/or recorded on a medium readable by computer and/or executable by a processor comprising software code adapted to perform at least one of the prediction method, encoding method or decoding method, wherein the software code is adapted to perform the steps of the prediction method and/or encoding method and/or decoding method described above.

In addition, the present disclosure concerns at least one non-transitory computer readable medium comprising a computer program product recorded thereon and capable of being run by a processor, including program code instructions for implementing the steps of the prediction method and/or encoding method and/or decoding method previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures in which:

- Figure 1 is a flow chart illustrating the main steps of a method for predicting a current block of pixels according to an embodiment of the disclosure;
- Figures 2A, 2B and 2C depict an example of inter-prediction of a current block, according to the method of Figure 1;
- Figure 3 is a flow chart illustrating the main steps of a method for encoding a sequence of frames according to an embodiment of the disclosure;
- Figure 4 is a flow chart illustrating the main steps of a method for decoding a sequence of frames according to an embodiment of the disclosure;
- Figures 5 to 7 are block diagrams of a device implementing the prediction method of Figure 1, the encoding method of Figure 3 and the decoding method of Figure 4, respectively.

In the figures, the represented blocks are purely functional entities, which do not necessarily correspond to physically separate entities. Namely, they could be developed in the form of software, hardware, or be implemented in one or several integrated circuits, comprising one or more processors.

### 5. Description of at least one embodiment

It is to be understood that the figures and descriptions of the present disclosure have been simplified to illustrate elements that are relevant for a clear understanding of the present disclosure, while eliminating, for purposes of clarity, many other elements found in typical devices for predicting a block of pixels, or encoding and/or decoding a sequence of frames.

The present disclosure relates to an iterative process for predicting blocks, enabling to update the prediction of a current block at each iteration. In this way, according to at least one embodiment, the predicted block is improved at each iteration.

According to the disclosure, such updated predicted block can be used by an encoder to encode in a more efficient manner a sequence of frames, and/or by a decoder to decode the sequence of frames.

*5.1 Prediction of a block*

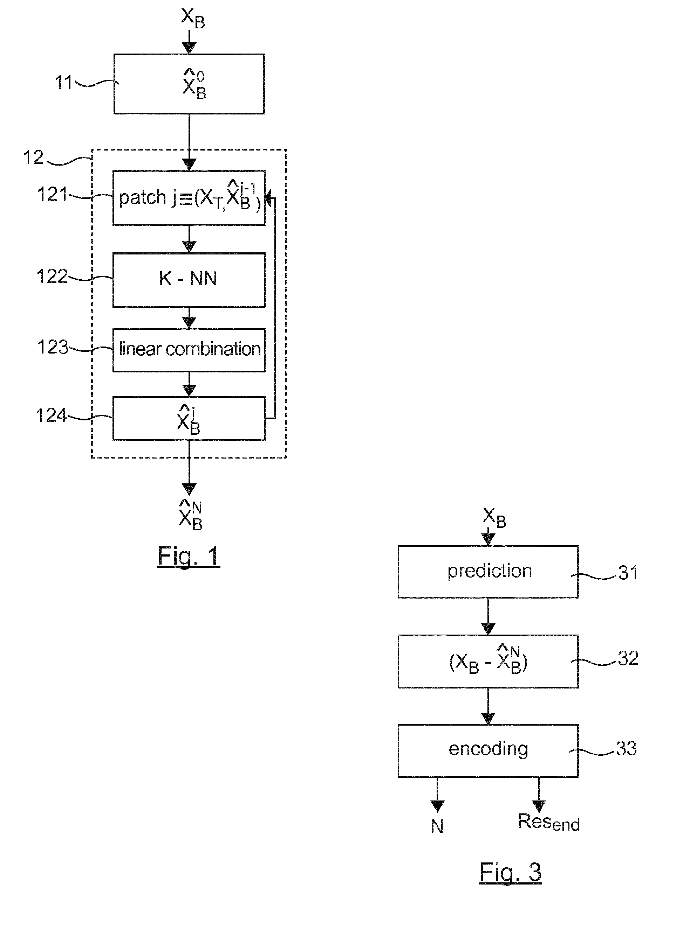

The main steps of the method for predicting blocks of pixels according to an embodiment of the invention are illustrated in **Figure 1.**

During a first step 11, a first prediction of a current block $X_B$ is implemented, delivering a first predicted block $\widehat{X}_B^0$. Such first prediction of the current block can be obtained using a classical technique, such as motion estimation/compensation (for inter prediction), or directional intra prediction modes, or template matching or multi-patches (for inter or intra prediction).

During a second step 12, the first predicted block $\hat{X}_B^0$ is updated by implementing at least one iteration of the following steps:

- obtaining 121 a current patch formed by a current template $X_T$ of the current block and an updated predicted block $\hat{X}_B^{j-1}$ obtained at a previous iteration. According to step 121, the current template $X_T$ is formed by a set of pixels neighboring the current block and located in a causal neighborhood of the current block, that is to say a neighborhood which is available at a decoder prior to decoding the current block. If we consider the "raster scan" decoding path, the current template comprises the pixels located on the left and above the current block $X_B$. For the first iteration $j = 1$, the updated predicted block obtained at a previous iteration is the first predicted block $\hat{X}_B^{j-1} = \hat{X}_B^0$;

- searching 122 for K nearest neighbor patches of said current patch in a decoded part of the current frame or in at least one reference frame. According to step 122, patches which are similar to the current patch are searched in a causal part of the current frame for intra prediction, or in at least one reference frame for inter prediction. Each of said K nearest neighbor patches is formed by a block and a template formed by a set of pixels neighboring said block. All the templates (K templates of the K nearest neighbor patches and the current template $X_T$) have an identical form. Each of the K nearest neighbor patch is thus identical in terms of shape and close in terms of texture to the current patch;

- determining 123 a linear combination of the K nearest neighbor patches which approximates the current patch, or of the K templates of the nearest neighbor patches which approximates the current template $X_T$, according to a predetermined criterion. For example, such criterion is a best approximation criterion;

- obtaining 124 an updated predicted block $\hat{X}_B^j$ by applying said linear combination to the corresponding K blocks of the nearest neighbor patches.

When a stop condition is reached, the iterations are stopped and the updated predicted block $\hat{X}_B^N$ obtained at the final iteration $j = N$ can be encoded and/or stored for later processing.

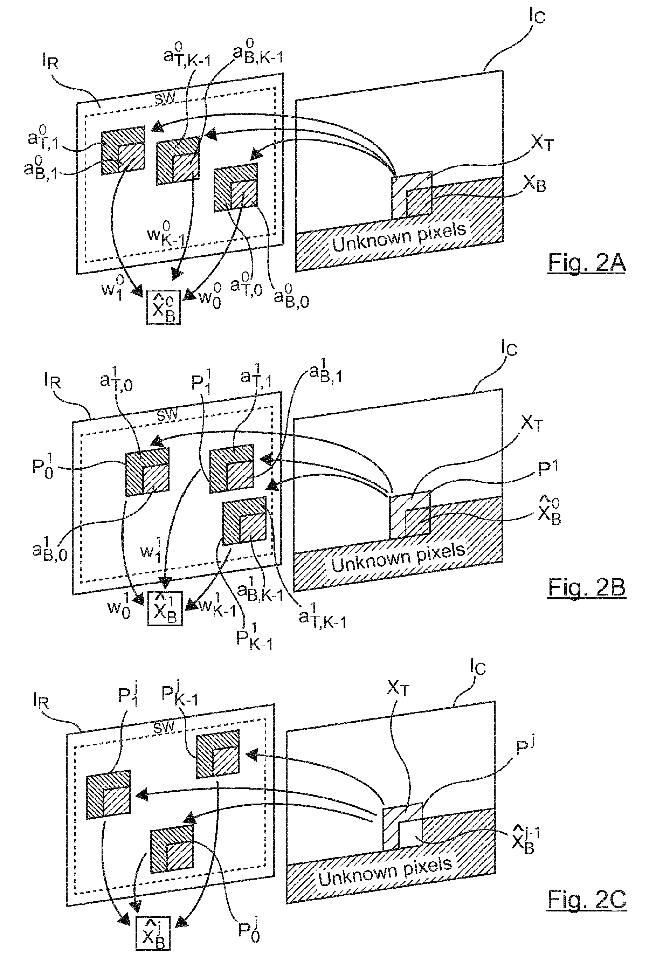

In order to illustrate the iterative process for predicting the current block, let's consider Figures 2A, 2B and 2C, which depict an example of inter-prediction of blocks, according to the method of Figure 1.

We consider a sequence of frames comprising at least a current frame $I_c$ and a reference frame $I_R$. The current frame $I_c$ comprises a current source block $X_B$. As illustrated in **Figure 2A,** a current template $X_T$ of the current block $X_B$ is formed by a set of pixels neighboring the current block in a decoded part of the current frame, for example pixels located on the left and above the current block $X_B$. Pixels located on the right and below the current block $X_B$ are unknown pixels, that is pixels not available at a decoder prior to decoding the current block.

In the example illustrated in Figure 2A, the first predicted block $\hat{X}_B^0$ is obtained from the reference frame $I_R$, by implementing a multi-patch technique. Other classical technique could be used to obtain the first prediction of the current block. Such first prediction could be considered as an initialization step for the iterative process (iteration index set to 0: $j = 0$).

According to this example, K=3 nearest neighbor (K-NN) templates of the current template $X_T$ of the current block are searched in a search window (SW) located in the reference frame $I_R$. For example, three nearest neighbor templates $a_{T,0}^0$, $a_{T,1}^0$ and $a_{T,K-1}^0$, having the same shape than the current template $X_T$ and a texture close to the texture of the current template $X_T$, are obtained. A linear combination of the K nearest neighbor templates which approximate the current template according to a predetermined criterion, for example a best approximation criterion, is then determined:

$$X_T \equiv w_0^0 a_{T,0}^0 + w_1^0 a_{T,1}^0 + w_{K-1}^0 a_{T,K-1}^0$$

Such linear combination aims at determining the weights $w_0^0$, $w_1^0$, and $w_{K-1}^0$ of the linear combination which estimates the current template $X_T$. Such weights could be learned using techniques such as Locally Linear Embedding (LLE), enhanced weighted averaging (using exponential weights), sparse representations or other neighbor embedding techniques such as Non-negative Matrix Representation (NMF), etc.

The first predicted block $\hat{X}_B^0$ is obtained by applying the weights of the linear combination to the K blocks $a_{B,0}^0$, $a_{B,1}^0$ and $a_{B,K-1}^0$ adjacent to the K nearest neighbor templates $a_T^0$, $a_T^1$ and $a_T^{K-1}$:

$$\hat{X}_B^0 = w_0^0 a_{B,0}^0 + w_1^0 a_{B,1}^0 + w_{K-1}^0 a_{B,K-1}^0$$

Such blocks $a_{B,0}^0$, $a_{B,1}^0$ and $a_{B,K-1}^0$ have the same shape than the current block $X_B$. Each patch formed by one of the nearest neighbor template $a_{T,i}^0$

and the adjacent block $a_{B,i}^0$, with i = {0, 1, $K$ - 1} has a same shape than the current patch.

According to this example, once the first predicted block $\hat{X}_B^0$ is obtained, the corresponding rate distortion value $RD_0$ is computed:

$$RD_0 = D_0 + \lambda R_0$$

where:

- $D_0$ is a distortion computed between the current source block $X_B$ and the decoded block after reconstruction (obtained from the first predicted block $\hat{X}_B^0$), for example using the sum of squared errors (SSE);
- $R_0$ is a rate corresponding to the sum of the rate needed to transmit the prediction residue and the rate needed to transmit an indicator representative of the initialization step (the iteration index $j$ = 0 for example); and
- $\lambda$ is a lagrangian parameter used to balance the two terms.

The iteration index is set to $j$ = 1, and the iterative process can be implemented.

The result of the first iteration $j$ = 1 is illustrated in **Figure 2B.**

We consider a current patch $P^1$ formed by the current template $X_T$ of the current block and the first predicted block $\hat{X}_B^0$. According to this inter prediction example, K nearest neighbor (K-NN) patches of the current patch $P^1$ are searched in a search window (SW) located in the reference frame $I_R$. For example, three nearest neighbor patch $P_0^1$, $P_1^1$ and $P_{K-1}^1$, having the same shape than the current patch and a texture close to the texture of the current patch, are obtained. Each of the nearest neighbor patch $P_0^1$, $P_1^1$ and $P_{K-1}^1$ is formed by a template, respectively $a_{T,0}^1$, $a_{T,1}^1$ and $a_{T,K-1}^1$, having the same shape than the current template $X_T$, and an adjacent block, respectively $a_{B,0}^1$, $a_{B,1}^1$ and $a_{B,K-1}^1$, having the same shape than the current block $X_B$.

According to a first example, a linear combination of the K nearest neighbor patches $P_0^1$, $P_1^1$ and $P_{K-1}^1$ which approximate the current patch $P^1$ according to a predetermined criterion, for example a best approximation criterion, is determined:

$$P^1 \equiv w_0^1 P_0^1 + w_1^1 P_1^1 + w_{K-1}^1 P_{K-1}^1$$

According to a second example, a linear combination of the K nearest neighbor templates $a_{T,0}^1$, $a_{T,1}^1$ and $a_{T,K-1}^1$ which approximate the current template $X_T$ according to a predetermined criterion, for example a best approximation criterion, is determined:

$$X_T \equiv w_0^1 a_{T,0}^1 + w_1^1 a_{T,1}^1 + w_{K-1}^1 a_{T,K-1}^1$$

Such linear combination aims at determining the weights $w_0^1$, $w_1^1$, and $w_{K-1}^1$ of the linear combination which estimates the current patch $P^1$ or the current template $X_T$. Once again, such weights could be learned using a technique such as Locally Linear Embedding (LLE), enhanced weighted averaging (using exponential weights), sparse representations or other neighbor embedding techniques such as Non-negative Matrix Representation (NMF), etc.

The updated predicted block at the current iteration $j$ $j = 1, \hat{X}_B^1$, is then obtained by applying the weights of the linear combination to the K blocks $a_{B,0}^1$, $a_{B,1}^1$ and $a_{B,K-1}^1$:

$$\hat{X}_B^1 = w_0^1 a_{B,0}^1 + w_1^1 a_{B,1}^1 + w_{K-1}^1 a_{B,K-1}^1$$

When the updated predicted block $\hat{X}_B^1$ is obtained, the corresponding rate distortion value $RD_1$ is computed:

$$RD_1 = D_1 + \lambda R_1$$

where:

- $D_1$ is the distortion computed between the current source block $X_B$ and the decoded block after reconstruction (obtained from the updated predicted block $\hat{X}_B^1$), for example using the sum of squared errors (SSE);
- $R_1$ is a rate corresponding to the sum of the rate needed to transmit the prediction residue and the rate needed to transmit an indicator representative of the iteration (the iteration index $j$ = 1 for example); and
- $\lambda$ is a lagrangian parameter used to balance the two terms.

The new rate-distortion value $RD_1$ could include the cost of the current iteration ($j = 1$) in the rate computation, which is for example the cost due to the transmission of the iteration index to the decoder.

The iterative process can continue, by incrementing the iteration index (set to $j = 2$), until a stop condition is reached.

The result of the j-iteration is illustrated in **Figure 2C.**

We consider a current patch $P^j$ formed by the current template $X_T$ of the current block and the updated predicted block $\hat{X}_B^{j-1}$ obtained at the previous iteration ($j$ - 1). According to this inter prediction example, K nearest neighbor (K-NN) patches of the current patch $P^j$ are searched in a search window (SW) located in the reference frame $I_R$. For example, three nearest neighbor patch $P_0^j$, $P_1^j$ and $P_{K-1}^j$, having the same shape than the current patch and a texture close to the texture of the current patch, are obtained. Each of the nearest neighbor patch $P_0^j$, $P_1^j$ and $P_{K-1}^j$ is formed by a template, respectively $a_{T,0}^j$, $a_{T,1}^j$ and $a_{T,K-1}^j$, having the same shape than the current template $X_T$, and an adjacent block, respectively $a_{B,0}^j$, $a_{B,1}^j$ and $a_{B,K-1}^j$, having the same shape than the current block $X_B$.

According to a first example, a linear combination of the K nearest neighbor patches $P_0^j$, $P_1^j$ and $P_{K-1}^j$ which approximate the current patch $P^j$ according to a predetermined criterion, for example a best approximation criterion, is determined:

$$P^j \equiv w_0^j P_0^j + w_1^j P_1^j + w_{K-1}^j P_{K-1}^j$$

According to a second example, a linear combination of the K nearest neighbor templates $a_{T,0}^j$, $a_{T,1}^j$ and $a_{T,K-1}^j$ which approximate the current template $X_T$ according to a predetermined criterion, for example a best approximation criterion, is determined:

$$X_T \equiv w_0^j a_{T,0}^j + w_1^j a_{T,1}^j + w_{K-1}^j a_{T,K-1}^j$$

The updated predicted block at the current iteration $j$, $\hat{X}_B^j$, is then obtained by applying the weights of the linear combination to the K blocks $a_{B,0}^j$, $a_{B,1}^j$ and

$a_{B,K-1}^j$:

$$\hat{X}_B^j = w_0^j a_{B,0}^j + w_1^j a_{B,1}^j + w_{K-1}^j a_{B,K-1}^j$$

When the updated predicted block $\hat{X}_B^j$ is obtained, the corresponding rate distortion value $RD_j$ is computed:

$$RD_j = D_j + \lambda R_j$$

where:

- $D_j$ is the distortion computed between the current source block $X_B$ and the decoded block after reconstruction (obtained from the updated predicted block $\hat{X}_B^j$), for example using the sum of squared errors (SSE);
- $R_j$ is a rate corresponding to the sum of the rate needed to transmit the prediction residue and the rate needed to transmit an indicator representative of the iteration (the iteration index $j$ for example); and
- $\lambda$ is a lagrangian parameter used to balance the two terms.

The new rate-distortion value $RD_j$ could include the cost of the current iteration in the rate computation, which is for example the cost due to the transmission of the iteration index to the decoder. The iterative process can continue, by incrementing the iteration index, until a stop condition is reached.

According to a first example, the stop condition is reached when the iteration index $j$ reaches a pre-defined maximum value $j_{max}$. For example, a pre-defined maximum number of iterations is $j = 10$.

According to a second example, the stop condition is reached when the new rate distortion value is superior to the previous one: $RD_j > RD_{j-1}$.

When the stop condition is reached ($j = j_{opt}$), the iterations are stopped and the updated predicted block $\hat{X}_B^N$ obtained at the final iteration can be encoded and/or stored for later processing.

For example, the final iteration index $j_{opt}$ can be sent to a decoder so that the same prediction process can be performed at the decoding side. No motion information needs to be transmitted, as the decoder can implement the same prediction method, with the same number of iterations.

To summarize, according to at least one embodiment of the disclosure, the prediction method obtain a first predictor for the current block, which is then iteratively improved by taking into account the texture information in the whole patch containing both the current template and the estimation of the current block, and not only the template. Such process can be optimized on the rate-distortion optimization criterion basis, in order to improve the rate-distortion performances of the multi-patches approaches for example.

In the above example, K is equal to 3 for the initialization step and the iterations (i.e. from $j = 0$ to $j = j_{opt}$). However, K could take another value, for example below 10.

According to a specific embodiment, the value of K is different for the initialization step and/or for each iteration. In this case, the values of K at each iteration should be known by the encoder and by the decoder, or an indicator of such values should be transmitted from the encoder to the decoder.

*5.2 Encoding of a sequence of frames*

The updated predicted block obtained at the final iteration, at least, can be used for encoding at least one current block of at least one current frame of a sequence of frames.

The main steps of the method for encoding a sequence of frames according to an embodiment of the invention are illustrated in **Figure 3,** for the encoding of a current block $X_B$. Such steps could be implemented for the encoding of all the blocks of pixels of the frames of the sequence.

First of all, a prediction 31 of a current block $X_B$ of a current frame of the sequence of frame is implemented, according to the prediction method described above.

Once the stop condition is met and the updated predicted block $\hat{X}_B^N$ is obtained, a prediction residue can be computed 32 by comparing the current block $X_B$ with the updated predicted block $\hat{X}_B^N$ obtained at the final iteration ($N = j_{opt}$).

The prediction residue can then be encoded 33, and stored and/or transmitted for retrieval by a decoder.

At least one indicator representative of the iterations implemented by the prediction method, among which an indicator representative of the final iteration, can also be encoded and/or stored and/or transmitted for retrieval by a decoder. In particular, the final iteration index can be directly transmitted to the decoder, as side information.

In particular, in order to reduce the cost of the transmission of the indicator(s) representative of the iterations, entropy coding can be used to encode the iteration index. Such encoding could be implemented in the CABAC of HEVC for example.

When the prediction technique according to the disclosure is applied to intra prediction of a current block, the cost of the transmission of the indicator(s) representative of the iterations could be further reduced, even avoid.

More specifically, when the prediction technique is implemented in a codec such as HEVC, specific improvement can be derived by adapting the proposed method prediction technique to the existing intra prediction process.

In HEVC, intra prediction is classically obtained using 33 directional modes, plus the planar and DC mode.

According to at least one embodiment of the disclosure, one or more directional modes of HEVC, or other encoding standard, could be replaced by one or more indicator representative of the iterations, in order to reduce the cost of the transmission. The planar and DC modes should not be replaced.

For example, the number of directional modes replaced by the indicators is the number of iterations N, or a number inferior to N. For HEVC, the maximum iteration number must be inferior to the directional modes number, i.e. 33.

According to this example, a first directional mode is replaced by a first iteration of the prediction method, a second directional mode is replaced by a second iteration of the prediction method, a j-th directional mode is replaced by a j-th iteration of the prediction method, and so on. Instead of explicitly send the indicator representative of the corresponding iteration to the decoder, the corresponding mode index is sent, which avoids sending side information.

Let's consider for example a prediction method according to the disclosure with a stop condition for $j_{opt} = 9$. The prediction method according to the disclosure thus delivers a first predicted block $\hat{X}_B^0$, associated with the iteration index 0, and nine updated predicted block $\hat{X}_B^1$ to $\hat{X}_B^9$, respectively associated with the iterations index 1 to 9.

As already mentioned, intra prediction is classically obtained using 33 directional modes, plus the planar and DC mode in HEVC. To keep the replaced directional modes uniformly spaced, one out of three directional modes could be replaced by an iteration index. For example, the correspondence between the iteration index and the directional mode index is given below:

$$\text{mode index} = (j + 1) * 3$$

In this way, the directional mode with a mode index 3 is replaced by the iteration index 0, the directional mode with mode index 6 is replaced by the iteration index 1, the directional mode with mode index 9 is replaced by the iteration index 2, etc.

As already explained, instead of explicitly send the index of the iteration to the decoder, the corresponding mode index is sent, which avoids sending supplemental information.

It should also be noted that by keeping a low number of iterations (less than half the number of directional modes), the directional prediction is not prejudiced.

*5.3 Signal*

Once encoded, the sequence of frames is sent to a decoder.

In the context where the encoder and the decoder implement a same mechanism for predicting a current block, it is possible to allow the decoder to know the number of iterations implemented by the encoder.

To this end, the signal representing a sequence of frames encoded according to the encoding method described above comprises at least one indicator representative of the iterations implemented to obtain the updated predicted block, among which an indicator representative of the final iteration. For example, such indicator is the index of the iteration.

According to the specific embodiment for intra prediction wherein one or more directional modes are replaced by one or more indicators representative of the iterations, no supplemental information needs to be transmitted to the decoder.

The signal can also carry at least one prediction residue computed and encoded as described above, and classical information.

*5.4 Decoding of a sequence of frames*

The signal carrying the indicator(s) representative of the iterations implemented to obtain the updated predicted block can be received by a decoder, and used to reconstruct the sequence of frames.

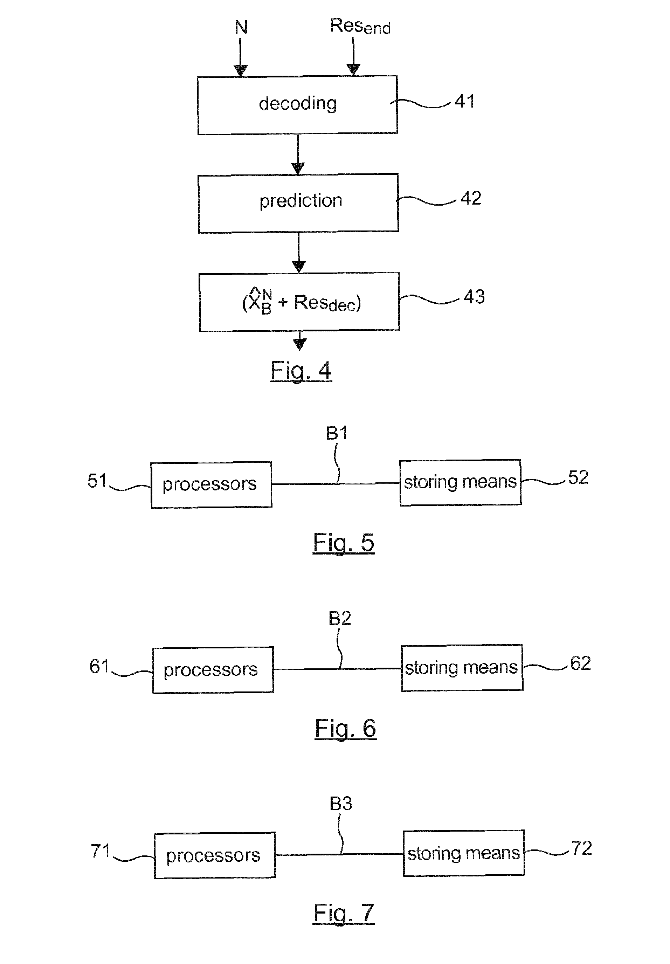

The main steps of the method for decoding a sequence of frames according to an embodiment of the invention are illustrated in **Figure 4,** for the decoding/reconstruction of a current block $X_B$. Such steps could be implemented for the decoding of the blocks of pixels of the frames of the sequence.

First of all, at least one indicator, representative of the iterations implemented to obtain the updated predicted block, is received and decoded 41 by a decoder. For example, such indicator comprises the index of the final iteration implemented at the encoding side ($j_{opt}$).

According to at least one embodiment, the decoder also receives an encoded prediction residue, which can be decoded.

A prediction 42 of the current block $X_B$ (to be decoded) is also implemented, according to the prediction method described above. In particular, the iterative process is stopped when the index of the iteration is equal to the index of the final iteration implemented at the encoding side, carried by the signal.

Once the stop condition is met and the updated predicted block $\hat{X}_B^N$ is obtained, the decoded prediction residue can be combined 43 with the updated predicted block obtained at the final iteration $\hat{X}_B^N$, to reconstruct the current block.

According to the specific embodiment for intra prediction wherein one or more directional modes are replaced by one or more indicators representative of the iterations, the final iteration index can be derived from the mode index received.

If we consider again the example in which one out of three directional modes are replaced by an iteration index, the iteration index is given by:

$$ j = \frac{mode\ index}{3} - 1 $$

The index of the final iteration implemented at the encoding side is the greatest $j$ ($j_{opt}$).

*5.5 Devices*

Figure 5 illustrates an example of a device for predicting a current block according to an embodiment of the disclosure. Only the essential elements of the prediction device are shown.

Such a prediction device comprises at least:

- at least one processor 51 for executing the applications and programs stored in a non-volatile memory of the device, and especially configured to:

  ○ obtain a first prediction of the current block, delivering a first predicted block,
  o update said first predicted block by implementing at least one iteration of the steps 121 to 124 previously described;

- storing means 52, such as a volatile memory,
- an internal bus B1 to connect the various modules and all means well known to the skilled in the art for performing the prediction device functionalities.

Figure 6 illustrates an example of a device for encoding a sequence of frames, according to an embodiment of the disclosure. Only the essential elements of the encoding device are shown.

Such an encoding device comprises at least:

- at least one processor 61 for executing the applications and programs stored in a non-volatile memory of the device and especially configured to:

  ○ obtain a first prediction of the current block, delivering a first predicted block,
  o update said first predicted block by implementing at least one iteration of the steps 121 to 124 previously described, until a stop condition is met;

o store and/or send at least one indicator representative of the iterations implemented by the prediction method, among which an indicator representative of the final iteration;

- storing means 62, such as a volatile memory;
- an internal bus B2 to connect the various modules and all means well known to the skilled in the art for performing the encoding device functionalities.

Figure 7 illustrates an example of a device for decoding a received sequence of frames, according to an embodiment of the disclosure. Only the essential elements of the decoding device are shown.

Such a decoding device comprises at least:

- at least one processor 71 for executing the applications and programs stored in a non-volatile memory of the device and especially configured to:

  ◦ obtain at least one indicator representative of at least one iteration implemented at encoding to obtain the updated predicted block, among which an indicator representative of the final iteration,
  ◦ obtain a first prediction of the current block, delivering a first predicted block,
  o update said first predicted block by implementing at least one iteration of the steps 121 to 124 previously described, until a stop condition defined by said indicator representative of the final iteration is reached;

- storing means 72, such as a volatile memory;
- an internal bus B3 to connect the various modules and all means well known to the skilled in the art for performing the decoding device functionalities.

Such predicting device and/or encoding device and/or decoding device could each be implemented according to a purely software realization, purely hardware realization (for example in the form of a dedicated component, like in an ASIC, FPGA, VLSI, ...), or of several electronics components integrated into a device or in a form of a mix of hardware elements and software elements. It could also be implemented in the form of a system.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1. A method for predicting a current block of pixels in a current frame, comprising:

- obtaining (11) a first prediction of the current block, delivering a first predicted block,
- updating said first predicted block by implementing at least one iteration (12) of the following steps:

  ∘ obtaining (121) a current patch formed by a current template of the current block and an updated predicted block obtained at a previous iteration;
  wherein the current template is formed by a set of pixels neighboring the current block and wherein, for the first iteration, the updated predicted block obtained at a previous iteration is the first predicted block;
  o searching (122) for K nearest neighbor patches of said current patch in a decoded part of the current frame or in at least one reference frame;
  wherein each of said K nearest neighbor patches is formed by a block and a template formed by a set of pixels neighboring said block;
  o determining (123) a linear combination of the K nearest neighbor patches which approximates the current patch, or of the K templates of the nearest neighbor patches which approximates the current template, according to a predetermined criterion,
  ∘ obtaining (124) an updated predicted block by applying said linear combination to the corresponding K blocks of the nearest neighbor patches.

2. The method according to claim 1, wherein obtaining (11) a first prediction of the current block comprises:

   - searching for K nearest neighbor templates of the current template of the current block in a decoded part of the current frame or in at least one reference frame,
   - determining a linear combination of the K nearest neighbor templates which approximate the current template according to a predetermined criterion,
   - obtaining the first predicted block by applying said linear combination to the K blocks adjacent to the K nearest neighbor templates.

3. The method according to claim 1, wherein obtaining (11) a first prediction of the current block comprises:

   - determining a motion vector between the current block and a corresponding reference block in a reference frame;
   - obtaining the first predicted block by applying the motion vector to the reference block.

4. The method according to any one of claims 1 to 3, comprising:

   computing a rate distortion value for the first predicted block and computing a rate distortion value for the updated predicted block obtained at each iteration.

5. The method according to claim 4, wherein the rate distortion value for the updated predicted block obtained at a current iteration takes into account a cost of transmission of an indicator representative of said current iteration.

6. The method according to claim 1 or claim 4, wherein the iterations for updating said first predicted block are stopped when the number of iterations is equal to a pre-defined number of iterations, or when the rate distortion value for the updated predicted block obtained at a current iteration is greater than the rate distortion value for the updated predicted block obtained at the previous iteration.

7. A method for encoding a sequence of frames, during which a predicted block is calculated for a current block of pixels of a current frame of the sequence, wherein the predicted block is the updated predicted block obtained from a prediction method according to anyone of claims 1 to 6.

8. The method according to claim 7, comprising transmitting and/or storing at least one indicator representative of the iterations implemented by the prediction method, among which an indicator representative of the final iteration.

9. The method according to claim 8, wherein said at least one indicator is transmitted by replacing at least one intra prediction directional mode.

10. A method for decoding a sequence of frames, during which a predicted block is calculated for a current block of pixels of a current frame of the sequence, wherein the predicted block is the updated predicted block obtained from a prediction method according to anyone of claims 1 to 6.

11. The method according to claim 10, comprising obtaining at least one indicator representative of at least one iteration implemented at encoding to obtain the updated predicted block, among which an indicator representative of the final iteration.

12. A device for predicting a current block of pixels in a current frame, comprising at least one processor configured to:

   - obtain a first prediction of the current block, delivering a first predicted block,
- update said first predicted block by implementing at least one iteration of the following steps:

○ obtaining a current patch formed by a current template of the current block and an updated predicted block obtained at a previous iteration;
wherein the current template is formed by a set of pixels neighboring the current block and wherein, for the first iteration, the updated predicted block obtained at a previous iteration is the first predicted block;
o searching for K nearest neighbor patches of said current patch in a decoded part of the current frame or in at least one reference frame;
wherein each of said K nearest neighbor patches is formed by a block and a template formed by a set of pixels neighboring said block;
o determining a linear combination of the K nearest neighbor patches which approximates the current patch, or of the K templates of the nearest neighbor patches which approximates the current template, according to a predetermined criterion;
○ obtaining an updated predicted block by applying said linear combination to the corresponding K blocks of the nearest neighbor patches.

13. A device for encoding and/or decoding a sequence of frames, comprising a device according to claim 12.

14. A computer program product downloadable from a communication network and/or recorded on a medium readable by computer and/or executable by a processor comprising program code instructions to execute the steps of a method according to anyone of claims 1 to 11 when this program is executed on a computer.

15. A signal representing a sequence of frames encoded according to the encoding method of anyone of claims 7 to 9, comprising at least one indicator representative of the iterations implemented to obtain the updated predicted block, among which an indicator representative of the final iteration.

$X_B$

| 11 | $\hat{X}_B^0$ |

12

| 121 | patch $j \equiv (X_T, \hat{X}_B^{j-1})$ |
| 122 | K - NN |
| 123 | linear combination |
| 124 | $\hat{X}_B^j$ |

$\hat{X}_B^N$

## Fig. 1

$X_B$

| prediction | 31 |
| $(X_B - \hat{X}_B^N)$ | 32 |
| encoding | 33 |

N        Res_{end}

## Fig. 3

Fig. 2A

Fig. 2B

Fig. 2C

N          Res$_{end}$

┌─────────────────┐
│    decoding     │ ── 41
└─────────────────┘
        │
        ▼
┌─────────────────┐
│    prediction   │ ── 42
└─────────────────┘
        │
        ▼
┌─────────────────┐
│ ($\hat{X}_B^N$ + Res$_{dec}$) │ ── 43
└─────────────────┘
        │
        ▼

<u>Fig. 4</u>

B1

51 ─ ┌──────────────┐ ────────── ┌──────────────┐ ── 52
     │  processors  │            │ storing means│
     └──────────────┘            └──────────────┘

<u>Fig. 5</u>

B2

61 ─ ┌──────────────┐ ────────── ┌──────────────┐ ── 62
     │  processors  │            │ storing means│
     └──────────────┘            └──────────────┘

<u>Fig. 6</u>

B3

71 ─ ┌──────────────┐ ────────── ┌──────────────┐ ── 72
     │  processors  │            │ storing means│
     └──────────────┘            └──────────────┘

<u>Fig. 7</u>

Europäisches
Patentamt

European
Patent Office

Office européen
des brevets

## EUROPEAN SEARCH REPORT

Application Number

EP 15 30 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CHERIGUI S ET AL: "Correspondence Map-Aided Neighbor Embedding for Image Intra Prediction", IEEE TRANSACTIONS ON IMAGE PROCESSING, IEEE SERVICE CENTER, PISCATAWAY, NJ, US, vol. 22, no. 3, 1 March 2013 (2013-03-01), pages 1161-1174, XP011498220, ISSN: 1057-7149, DOI: 10.1109/TIP.2012.2227772 | 1,2,7, 10,12-15 | INV. H04N19/109 H04N19/11 H04N19/147 H04N19/176 H04N19/192 |
| Y | * sections IV and V.A * | 3-6,8,9, 11 | |
| X,D | ALAIN MARTIN ET AL: "Locally linear embedding methods for inter image coding", 2013 IEEE INTERNATIONAL CONFERENCE ON IMAGE PROCESSING, IEEE, 15 September 2013 (2013-09-15), pages 1904-1908, XP032565573, DOI: 10.1109/ICIP.2013.6738392 [retrieved on 2014-02-11] | 1,2,7, 10,12-15 | |
| Y | * section 3.1 *<br>* figure 2 *<br>* equation (4) * | 3-6,8,9, 11 | TECHNICAL FIELDS SEARCHED (IPC) |
| | | | H04N |
| Y,D | SUGIMOTO K ET AL: "Inter frame coding with template matching spatio-temporal prediction", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 1, 24 October 2004 (2004-10-24), pages 465-468, XP010784855, DOI: 10.1109/ICIP.2004.1418791 ISBN: 978-0-7803-8554-2 * page 466, right-hand column, line 11 - line 12 * | 3-6,9 | |

-/--

The present search report has been drawn up for all claims

| Place of search | Date of completion of the search | Examiner |
|---|---|---|
| Munich | 14 December 2015 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 30 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/028317 A1 (PARFENOV DENIS VASSILEVICH [RU] ET AL) 31 January 2013 (2013-01-31) * paragraph [0006] * * table 1 * ----- | 9 | |

TECHNICAL FIELDS
SEARCHED     (IPC)

The present search report has been drawn up for all claims

| Place of search | Date of completion of the search | Examiner |
|---|---|---|
| Munich | 14 December 2015 | Regidor Arenales, R |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

# EP 3 151 558 A1

## ANNEX TO THE EUROPEAN SEARCH REPORT
## ON EUROPEAN PATENT APPLICATION NO.

EP 15 30 6538

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2015

| Patent document cited in search report | Publication date | Patent family member(s) | Publication date |
|---|---|---|---|
| US 2013028317 A1 | 31-01-2013 | RU 2011131824 A<br>US 2013028317 A1 | 10-02-2013<br>31-01-2013 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. K. TAN et al.** Intra prediction by template matching. *IEEE Int. Conf. Image Process,* 2006, 1693-1696
- **K. SUGIMOTO et al.** Inter frame coding with template matching spatiotemporal prediction. *IEEE Int. Conf. Image Process,* 2004, vol. 1, 465-468
- **S. CHERIGUI et al.** Correspondence map-aided neighbor embedding for image intra prediction. *IEEE Transactions on Image Processing,* March 2013, vol. 22-3, 1161-1174
- **M. ALAIN et al.** Locally linear embedding methods for inter image coding. *IEEE Int. Conf. Image Process,* 2013, 1904-1908